# EUROPEAN PATENT SPECIFICATION

(11) **EP 0 280 112 B1**
(45) Date of publication and mention of the grant of the patent: **13.01.1993**
(21) Application number: 88101895.6
(22) Date of filing: 09.02.1988
(51) Int. Cl.: C04B 37/02, B23K 20/02, B23K 20/16

(54) **Method of and device for bonding two or more members**
Verfahren und Vorrichtung zum Verbinden zweier oder mehrerer Teile
Procédé et dispositif pour l'assemblage de deux ou plusieurs articles

(30) Priority: 27.02.1987 JP 42659/87
(43) Date of publication of application: 31.08.1988
(73) Proprietor: HITACHI, LTD., Chiyoda-ku, Tokyo 101 (JP)
(72) Inventor: Yokoi, Kazuaki, Chiyodamura Niihari-gun Ibaraki-ken (JP); Yamada, Toshihiro, Nishiibaraki-gun Ibaraki-ken (JP); Kohno, Akiomi, Nishiibaraki-gun Ibaraki-ken (JP); Hioki, Susumu, Kashiwa-shi (JP)
(74) Representative: Finck, Dieter, Dr.Ing.

(56) References cited:
- EP-A- 0 090 658
- EP-A- 0 123 382
- EP-A- 0 135 937
- DE-A- 3 233 022
- US-A- 4 252 263
- CHEMICAL ABSTRACTS, vol. 103, no. 20, 18th November 1985, page 300, abstract no. 165153k, Columbus, Ohio, US; & JP-A-60 103 081 (HITACHI LTD) 07-06-1985

## Description

The invention relates to a method for bonding at least two members, particularly metallic and/or ceramic members.

US patent 4 252 263 describes a press for diffusion bonding metal surfaces together. The press comprises two metallic plates aligned parallel to each other. Each plate exhibits a predetermined thermal coefficient of expansion. The plates are connected by screw bolts. Sufficient space is left between the plates to accomodate metallic elements to be pressed together. The screw bolts consist of a material selected to have a thermal coefficient of expansion such that when the assembly including the plates and the screw bolts is heated to an elevated temperature during a diffusion bonding operation, the metallic plates expand to a greater extent than do the screw bolts. Thus, a compressive force is exertet by the two plates upon the elements to be bonded together between the two plates.

With the press a structured copper disk and a metal foil can be bonded together in an inert atmosphere. The copper disk is surrounded by a retaining ring, in order to hold the copper disk together when the disk and the metallic foil are squeezed together with high pressure at a sufficiently low elevated temperature to cause diffusion bonding of both parts.

A similar arrangement is used as shown in EP 0 090 658 for bonding an abrasive compact to a body of cemented carbide by inserting a thin layer of nickel, copper, cobalt, iron or an alloy containing one or more of these metals. Instead of two plates and screw bolts a rectangular frame structure is used, in which the body in form of a tool shank, the thin metal layer and the abrasive compact are arranged and fixed by wedges. The assembly is heated to a temperature which allows diffusion bonding taking place. At this temperature the wedges expand at a faster rate than the frame structure. This has the effect of exerting a bonding pressure on the tool shank and the compact. By the diffusion bonding a composite abrasive compact is formed.

The use of such kind of pressing assemblies requests applying of very high pressures during bonding in order to get the desired bonding effect.

Further EP 0 135 937 A3 refers to bonding alumina to a metal which are bonded together by being heated and pressed with an interlayer being interposed between the surfaces of the alumina and the metal which are to be bonded. That interlayer consists of a core sheet of an aluminum-base alloy and two skins of an aluminum-silicon alloy. Heating is effected up to a temperature higher than the solidus line of the aluminum-silicon alloy.

During this bonding procedure the easily meltable material of the skins or surface layers will flow radially outwardly with the result that heating will fail to generate a pressure high enough to bond the members consisting of an alumina part and a metal part, together to the extent necessary to assure the required bonding strength and the required fluid tightness at the bonding section of the bonded structure. A hydraulic cylinder is used to compensate for the pressure drop due to such flow of the surface layers of the insert to thereby maintain a high pressure between the members to be bonded. Such a hydraulic cylinder prevents mass production of bonded composite articles.

The object of the invention is to provide a method for bonding at least two members, particularly metallic and/or ceramic members by making use of the difference in the thermal expansion between the members to be bonded and a surrounding jig which method can be used for mass production.

This object is obtained with the before mentioned method by interposing between the two members an insert comprising surface layers of an aluminum-silicon alloy and a core layer of aluminum or an aluminum alloy having a melting point higher than that of the surface layers, by placing the stack consisting of the two members and of the interposed insert between a pair of clamping plates connected by bolts and nuts, by pressing the stack in direction of the thickness with a pressure of not less than 15 10⁵ Pa, by tightening the nuts and the bolts with a torque ranging from 1 to 12 Nm, by removing the said pressure, by heating the assembly consisting of the stack, the clamping plates, the bolts and nuts to a temperature selected to cause only the surface layers of the insert to melt and by pressing thereby the two members against each other because of a difference in the thermal expansion between the stack with the clamping plates and the bolts with nuts which difference is not smaller than 75 % of the total thickness of the surface layers of the insert.

If the initial pressure applied to the stack before heating is 15 10⁵ Pa or below, there is a risk that the members are bonded incompletely because of presence of voids attributable to contamination of the bonding surfaces due to, e.g. oxidation caused by heating, with the result that both the bonding strength and the gas-tightness of the bond are impaired. According to the invention, however, the generation of voids and, hence, incomplete bonding are avoided by virtue of an initial pressing force applied to the stack of the members to be bonded provided that the pressure initially applied is not lower than 15 10⁵ Pa and that the nuts of the structure consisting of the pair of clamping plates connected by bolts and nuts, are tightened with a torque ranging from 1 to 12 Nm. As a result of the heating, the aluminum insert member is melted to reduce in the thickness by an amount determined by the above mentioned difference in the thermal expansion, so that the bonding is accomplished in such a manner as to insure a high degree of dimensional precision of a resultant product.

The assemblies consisting of the two members to be bonded together with their insert, the clamping plates, the bolts and the nuts, can be easily heated by arranging a plurality of assemblies on a conveyor which runs through a heating furnace in which a vacuum or argon gas atmosphere is maintained, thus having a high production efficiency and mass production, while diminishing limitations in respect to the sizes and shapes of the members to be bonded by virtue of elimination of shrink fit.

Advantageously bolts of a material containing niobium or molybdenum are used, usually together with clamping plates made of steel.

Preferably the stack of the two members with the interposed insert are supplemented by a pressing jig for pressing the stack in the direction of the thickness, which pressing jig exhibits a thermal expansion which is smaller than the total thermal expansion of the stack and the clamping plates with bolts and nuts.

As a pressing jig, preferably a rod of an austenitic stainless steel is used while the bolts for the clamping plates consist of mild carbon steel.

Preferred embodiments of the present invention will be described hereinunder with reference to the accompanying drawings.
Fig. 1 is a perspective view of an embodiment of a bonding device in accordance with the present invention;
Fig. 2 is a diagram showing the relationship between pressing force and bending strength of a product composed of two members bonded to each other by means of the device shown in Fig. 1;
Fig. 3 is a side elevational view of practical form of a stacked assembly of members which are to be bonded and the bonding device shown in Fig. 1;
Fig. 4 is a diagram showing the relationship between the pressing force applied during bonding by the embodiment shown in Fig. 3 and shearing strength of a product;
Fig. 5 is a diagram showing the relationship between tightening torque applied before heating in the embodiment shown in Fig. 3 and shearing strength of the product;
Fig. 6 is a side elevational view of a stacked assembly of members to be bonded and another embodiment of the bonding device of the present invention;
Fig. 7 is a diagram showing the relationship between the tightening torque before heating in the embodiment shown in Fig. 6 and the shearing strength of a product; and
Fig. 8 is a diagram showing the effect of pressing force and bonding temperature on the bending strength of the product obtained by the embodiment shown in Fig. 6.

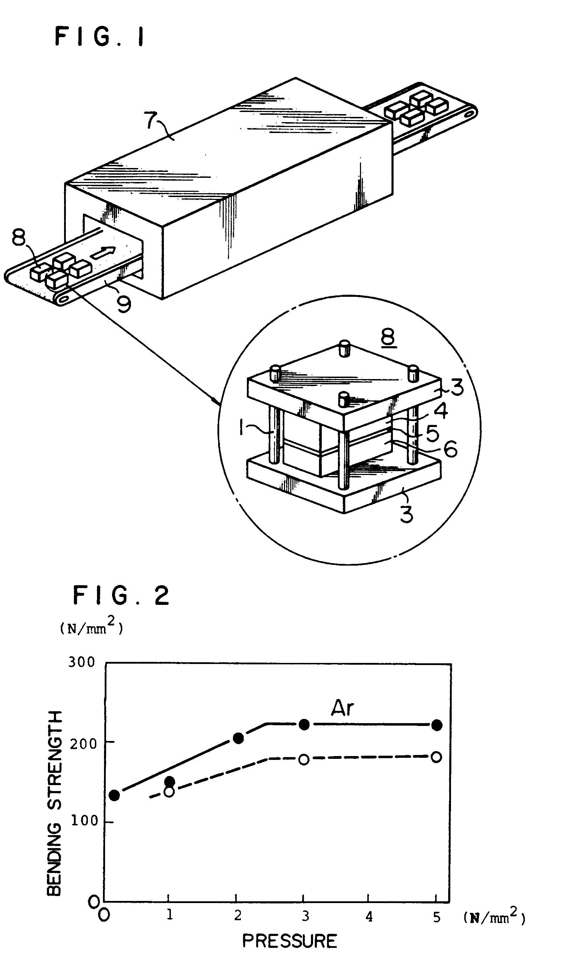

Fig. 1 is a schematic perspective view of an embodiment of the bonding device in accordance with the present invention. This embodiment employs a stacked assembly denoted by 8 and including, as shown in a greater scale in a circle, a stack of a ceramics plate 4 of a suitable ceramics material such as sialon [(Si, Al)₃(O,N)₄], a plate 6 of a metallic material such as mild carbon steel, and an insert member 5 of, for example, aluminum sandwiched between the ceramics plate 4 and the metal plate 6. The assembly 8 further includes a clamping jig which includes a pair of clamping plates 3 which clamp therebetween the stack of the ceramics plate 4, the insert member 5 and the metal plate 6, and bolts 1 for tightening the clamping plates 3 together thereby pressing the stack of the ceramics plate 4, the insert member 5 and the metal plate 6 disposed between these clamping plates.

The assembly 8 thus prepared is placed on a conveyor 9 which runs through a heating furnace 7. Thus, the heating furnace 7 serves as a continuous bonding furnace by which a plurality of such assemblies 8 are successively heated so that the members of each stack are bonded together.

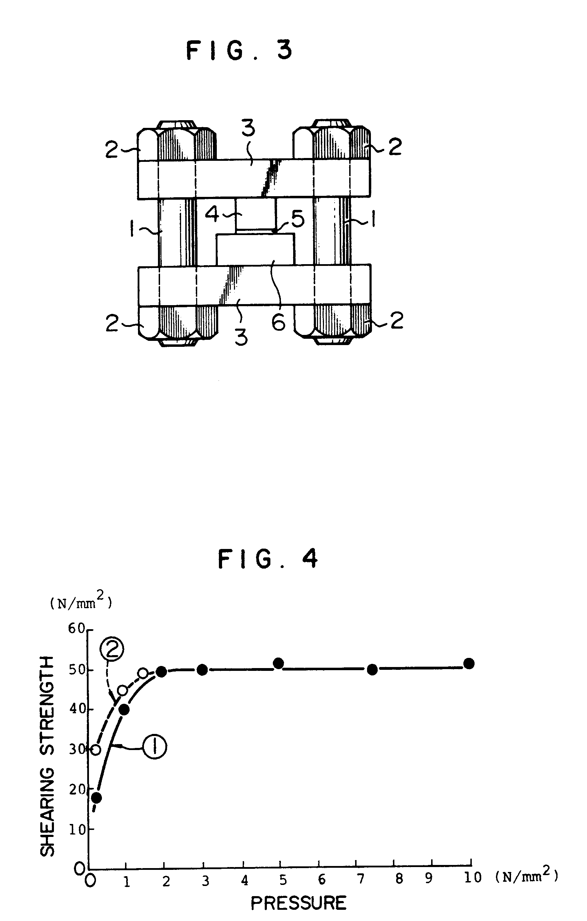

The bonding is effected in an atmosphere of argon gas under atmospheric pressure. The pressure is applied by the clamping jig, as shown in the circle in Fig. 1 or in Fig. 3.

The described arrangement is suitable for use in a mass-production of composite article such as, for example, a rocker arm of a valve actuating mechanism of an internal combustion engine. More specifically, the described arrangement makes it possible to mass-produce 100 or more rocker arms per hour. The strength of the products depends on the pressing force applied during bonding, as will be seen from Fig. 2.

A practical embodiment will be described hereinunder with reference to Figs. 3 to 5. Referring to Fig. 3, a stack is prepared by stacking JIS S20C (0.2% carbon) mild steel member 6 of 20 mm in diameter and 10 mm in height, a sialon member 4 of 10 mm in diameter and 10 mm in height and an insert member 5 which is 10 mm in diameter and 0.6 mm in thickness and which is formed by a composite aluminum sheet composed of surface layers each of an aluminum-silicon-magnesium alloy (Aℓ -10%Si- 2%Mg alloy) of 0.06 mm in thickness and a core member of an alminium (Aℓ) - manganese (Mn) alloy. The thus prepared stack is placed between a pair of clamping plates 3 made of SUS304 (18%Cr - 8%Ni) steel or SCM430 (0.2wt%C - lwt%Cr - 0.25wt%Mc) steel to form an assembly which is then placed in a hydraulic press, so that the assembly is pressed with a predetermined pressure. In this state, the clamping plates 3 are held together by means of four bolts 1 made of a material containing molybdenum (Mo) or niobium (Nb) and nuts 2 screwed onto the bolts and tightened with a predetermined torque by means of a torque wrench. Then, the hydraulic pressure exerted by the hydraulic press is removed, whereby a stack with a jig, i.e., a stacked assembly 8, is prepared. This assembly 8 is then placed in a furnace which maintains an argon gas atmosphere and is kept 610°C (temperature at which the surfaces layers of the insert member 5 melt). The assembly 8 is held in the furnace for 20 minutes. In consequence, the sialon member 4 and the JIS S20C steel member 6 are bonded together through the molten surface layers of the insert member 5.

Fig. 4 shows how the shearing strength of the product varies in relation to the magnitudes of the pressing force when the tightening torque is maintained at a constant level of 200 N · cm. More specifically, in Fig. 4, a curve (1) shows a result obtained when the clamping plates 3 of SCM 430 steel were used in combination with bolts of a material containing Nb, while a curve (2) shows a result obtained when the clamping plates 3 of SUS 340 steel were used in combination with bolts of a material containing Mo. When the pressing force is below 0,25 N/mm², the shearing strength of the product is not so high due to the presence of non-reacted region between the Aℓ insert member 5 and the S20C member 6. The non-reacted region between the Aℓ insert member 5 and the S20C member 6, however, becomes very small when the pressing force is increased beyond 1 N/mm², so that the bonding strength is improved appreciably. A high shearing strength of 50 N/mm² can be obtained when the pressing force or pressure is 2 N/mm² or higher. It will also be understood that the combination of the SUS304 steel clamping plates and the bolts containing Mo exhibits, as shown by the curve (2), a shearing strength higher than that of the combination of the SCM 430 clamping plates and bolts containing Nb shown by the curve (1), in the region where the pressure is low. This is attributed to the fact that the combination shown by the curve (2) sustains a greater amount of constraint than the combination shown by the curve (1) in the course of heating up to the bonding temperature.

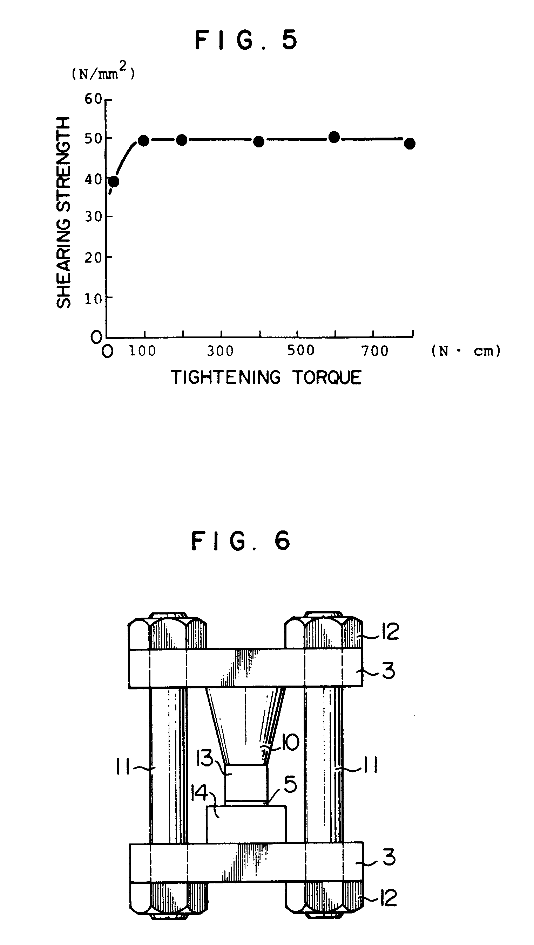

Fig. 5 shows the relationship between the tightening torque and the shearing strength, obtained when a combination of SUS 304 steel clamping plates and the Nb bolts is used under a constant pressing force of 3 N/mm². The shearing strength is somewhat low when the tightening torque is 25 N · cm or lower, due to the presence of slight non-bonded region, but a high shearing strength of 50 N/mm² or greater can be obtained stably when the tightening torque is increased beyond 100 N · cm.

In the described embodiment, the tightening torque is preferably not lower than 100 N· cm in order to prevent generation of any non-bonded region (void) caused by insufficient contact between the aluminium insert member and the members to be bonded together. On the other hand, a too high level of tightening torque must be avoided because such a high torque may cause deformation of the bolts or the clamping plates with the result that the jig cannot be used repeatedly. The tightening torque, therefore, should be selected such that the tension caused in the bolt is not greater than half the tensile strength of the bolt or such that the bending stress applied to the clamping plates is not greater than half the critical stress which causes the clamping plate to bend. In this embodiment, therefore, the tightening torque is selected to be not greater than 1200 N · cm.

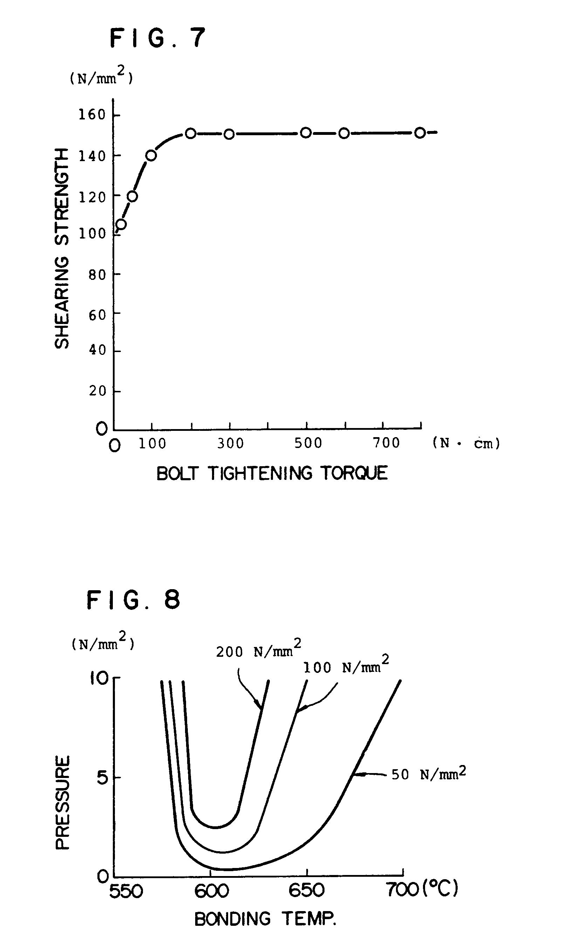

A second practical embodiment will be described hereinunder with specific reference to Figs. 6 and 7. In this case, a stack is prepared by stacking, in a manner shown in Fig. 6, a silicon nitride (Si₃N₄) member 13 having a diameter of 10 mm and a height of 20 mm and a silicon carbide (SiC) member 14 having a diameter of 10 mm and a height of 10 mm with the intermediary of an Aℓ insert 5 which was the same as that used in the embodiment described in connection with Figs. 3 to 5. In addition, a pressing rod 10 of an austenitic stainless steel (SUS 304) of 20 mm in length and having a large thermal expansion coefficient is placed on the silicon nitride member 13. The thus arranged stack is then placed between clamping plates 3 (10 mm thick) of SUS 304 stainless steel and the clamping plates 3 are pressed by a hydraulic press at a pressure of 40 kg. In this state, the clamping plates 3 with the stack clamped therebetween are held together by mild carbon steel bolts 11 and nuts 12 tightened with a predetermined level of tightening torque to form a stacked assembly. The thus prepared assembly is then heated to and held at 600°C for 30 minutes within an argon gas atmosphere, whereby a product composed of members 13 and 14 bonded together is obtained. The thus obtained product was subjected to a shearing test, the result of which is shown in Fig. 7.

As will be seen from Fig. 7, in this embodiment, a high shearing strength of 150 N/mm² can stably be obtained when the tightening torque is 200 N·cm or greater. Thus, an advantage the same as that provided by the preceding embodiment is obtained even when the bolts and nuts are of ordinary materials.

Fig. 8 shows how the bonding strength is influenced by the bonding temperature and the pressing force. More specifically, the bonding strength is shown in terms of four-point flexural moment bending strength of a product which is composed of sialon member and a JIS S20C steel member bonded together with an Aluminium insert member. From this figure, it will be seen that the bonding temperature preferably ranges between 585°C and 630°C.

Although the invention has been described with reference to the case where a ceramics material and a metallic member are bonded together as well as the case where different ceramics material are bonded, the invention can equally be applied to cases where bonding is to be conducted between members of the same ceramics material, members of the same metallic material, and members of different metallic materials. The use of the intermediate insert member is not essential. For instance, the method and device of the invention can be used when two members of, for example, copper are to be bonded directly or indirectly through the intermediary of silver plating layers on the joint surfaces of these copper members. The method and device of the present invention can also be used in bonding two members with a brazing material such as a copperbrazing material or a solder. It is also possible to use a sheet of titanium, copper and so forth as the insert member.

It is to be understood that, though the described embodiment employs an argon atmosphere, this is not exclusive and the bonding method of the invention can be successfully carried out in vacuum, or even in atmospheric air provided that the torque with which the nuts on the bolts are tightened is sufficiently large.

According to the present invention, when the members to be bonded are constrained by a jig, the pressing force is controlled to be 1,5 N/mm² or greater and the torque with which the nuts on the constraining bolts is controlled to be 100 N · cm or greater. Therefore, the members to be bonded are maintained in close contact with the insert member so as to eliminate generation of voids attributable to contamination of the surfaces of the members to be bonded and/or the insert member, whereby a sufficiently high bonding strength is stably obtained. In addition, it is possible to attain a high dimensional precision of the product with minimized fluctuation in the thickness by using a jig having a sufficiently high rigidity. Furthermore, the use of a simple jig makes it possible to employ a continuous heating furnace, thereby enabling products to be mass-produced at a moderate production cost.

## Claims

1. A method for bonding at least two members, particularly metallic and/or ceramic members, comprising the steps
a) interposing between the two members (4, 6; 13, 14) an insert (5) comprising surface layers of an aluminum-silicon alloy and a core layer of aluminum or an aluminum alloy having a melting point higher than that of the surface layers,
b) placing the stack consisting of the two members (4, 6; 13, 14) and of the interposed insert (5) between a pair of clamping plates (3) connected by bolts (1, 11) and nuts (2, 12)
c) pressing the stack in direction of its thickness with a pressure of not less than 15 10⁵ Pa
d) tightening the nuts (2, 12) and the bolts (1, 11) with a torque ranging from 1 to 12 Nm,
e) removing the said pressure,
f) heating the assembly consisting of the stack, the clamping plates (3), the bolts (1, 11) and nuts (2, 12) to a temperature selected to cause only the surface layers of the insert (5) to melt and
g) pressing thereby the two members (4, 6; 13, 14) against each other because of a difference in the thermal expansion between the stack with the clamping plates (3) and the bolts (1, 11) with nuts (2, 12) which difference is not smaller than 75 % of the total thickness of the surface layers of the insert (5).

2. Method according to claim 1, wherein bolts (1) of a material containing niobium or molybdenum are used.

3. Method according to claim 1 or 2, wherein the stack of the two members (13, 14) with the interposed insert (5) comprises a pressing jig (10) for pressing the stack in the direction of its thickness, which pressing jig (10) exhibits a thermal expansion which is smaller than the total thermal expansion of the stack and the clamping plates (3) with bolts (11) and nuts (12).

4. Method according to claim 3, wherein a rod (10) of an austenitic stainless steel is used as a pressing jig (10) the bolts (11) for the clamping plates (3) consisting of mild carbon steel.

5. Method according to one of the preceding claims, wherein a plurality of assemblies (8) is based on a conveyer (9) running through a heating furnace (7) in which a vacuum or argon gas atmosphere is maintained.

6. Method according to one of the preceding claims, wherein clamping plates (3) made of steel are used.

## Patentansprüche

1. Verfahren zum Verbinden von wenigstens zwei Teilen, insbesondere metallischen und/oder keramischen Teilen, welches die Schritte aufweist
a) Legen eines Einsatzes (5), der Oberflächenschichten aus einer Aluminium-Siliziumlegierung und eine Kernschicht aus Aluminium oder einer Aluminiumlegierung aufweist, welche einen Schmelzpunkt hat, der höher als der der Oberflächenschichten ist, zwischen die beiden Teile (4, 6; 13, 14),
b) Anordnen des Stapels bestehend aus den beiden Teilen (4, 6; 13, 14) und dem dazwischengelegten Einsatz (5) zwischen einem Paar von Klemmplatten (3), die durch Schraubenbolzen (1, 11) und Muttern (2, 12) verbunden sind,
c) Pressen des Stapels in Richtung seiner Dicke mit einem Druck von nicht weniger als 15 x 10⁵ Pa,
d) Anziehen der Muttern (2, 12) und der Schraubenbolzen (1, 11) mit einem Drehmoment, das sich von 1 bis 12 Nm erstreckt,
e) Entfernen des Drucks,
f) Erhitzen der Anordnung, bestehend aus dem Stapel, den Klemmplatten (3), den Schraubenbolzen (1, 11) und Muttern (2, 12) auf eine Temperatur, die so ausgewählt ist, daß nur die Oberflächenschichten des Einsatzes (5) zum Schmelzen gebracht werden, und
g) dadurch Pressen der beiden Teile (4, 6; 13, 14) gegeneinander aufgrund einer Differenz in der Wärmeausdehnung zwischen dem Stapel mit den Klemmplatten (3) und den Schraubenbolzen (1, 11) mit Muttern (2, 12), wobei die Differenz nicht kleiner als 75 % der gesamten Dicke der Oberflächenschichten des Einsatzes (5) ist.

2. Verfahren nach Anspruch 1, bei welchem Schraubenbolzen (1) aus einem Material verwendet werden, das Niob oder Molybdän enthält.

3. Verfahren nach Anspruch 1 oder 2, bei welchem der Stapel aus den beiden Teilen (13, 14) mit dem dazwischengelegten Einsatz (5) ein Preßstück (10) aufweist, um den Stapel in Richtung seiner Dicke zu pressen, wobei das Preßstück (10) eine Wärmeausdehnung hat, die kleiner ist als die gesamte Wärmeausdehnung des Stapels und der Klemmplatten (3) mit Schraubenbolzen (11) und Muttern (12).

4. Verfahren nach Anspruch 3, bei welchem eine Stange (10) aus einem austenitischen rostfreien Stahl als Preßstück (10) verwendet wird, wobei die Schraubenbolzen (11) für die Klemmplatten (3) aus weichem Kohlenstoffstahl bestehen.

5. Verfahren nach einem der vorhergehenden Ansprüche, bei welchem eine Vielzahl von Anordnungen (8) auf einem Förderer (9) aufgelegt werden, der durch einen Heizofen (7) läuft, in welchem ein Vakuum oder eine Argongasatmosphäre aufrechterhalten wird.

6. Verfahren nach einem der vorhergehenden Ansprüche, bei welchem Klemmplatten (3) verwendet werden, die aus Stahl hergestellt sind.

## Revendications

1. Procédé pour réunir au moins deux éléments en particulier des éléments métalliques et/ou céramiques, comprenant les étapes consistant à
a) intercaler entre les deux éléments (4,6;13,14) un insert (5) possédant des couches superficielles formées d'un alliage d'aluminium-silicium et une couche intérieure formée d'aluminium ou d'un alliage d'aluminium possédant un point de fusion supérieur à celui des couches superficielles,
b) placer la pile constituée par les deux éléments (4,6; 13,14) et par l'insert intercalé (5) entre un couple de plaques de serrage (3) raccordées par des boulons (1,11) et des écrous (2,12),
c) comprimer la pile dans la direction de son épaisseur avec une pression non inférieure à 15.10⁵ Pa,
d) serrer les écrous (2,12) et les boulons (1,11) avec un couple compris entre 1 et 12 Nm,
e) supprimer ladite pression,
f) chauffer l'ensemble constitué par la pile, les plaques de serrage (3), les boulons (1,11) et les écrous (2,12) à une température choisie de manière que seules les couches superficielles de l'insert (5) fondent, et
g) serrer de ce fait les deux éléments (4,6; 13,14) l'un contre l'autre en raison de la présence d'une différence de dilatation thermique entre la pile avec les plaques de serrage (3) et les boulons (1,11)avec les écrous (2,12), cette différence n'étant pas inférieure à 75 % de l'épaisseur totale des couches superficielles de l'insert (5).

2. Procédé selon la revendication 1, selon lequel on utilise des boulons (1) réalisés en un matériau contenant du niobium ou du molybdène.

3. Procédé selon la revendication 1 ou 2, selon lequel la pile formée des deux éléments (13,14) et de l'insert intercalé (5) comprend un gabarit de serrage (10) servant à comprimer la pile dans la direction de son épaisseur, lequel gabarit de serrage (10) présente une dilatation thermique qui est inférieure à la dilatation thermique totale de la pile et des plaques de serrage (3) équipées des boulons (11) et des écrous (12).

4. Procédé selon la revendication 3, selon lequel on utilise une tige (10) formée d'un acier austénitique inoxydable en tant que gabarit de serrage (10), les boulons (11) pour les plaques de serrage (3) étant constitués par de l'acier carburé doux.

5. Procédé selon l'une des revendications précédentes, selon lequel une pluralité d'ensembles (8) sont disposés sur un convoyeur (9) traversant un four de chauffage (7), dans lequel est maintenu un vide ou une atmosphère de gaz argon.

6. Procédé selon l'une des revendications précédentes, selon lequel on utilise des plaques de serrage (3) réalisées en acier.
